# EUROPEAN PATENT SPECIFICATION

(11) **EP 3 232 227 B1**
(45) Date of publication and mention of the grant of the patent: **18.10.2023**
(21) Application number: 15867600.7
(22) Date of filing: 27.11.2015
(51) Int. Cl.: G01T 1/20

(54) **RADIATION MONITOR AND RADIATION MONITORING METHOD**
STRAHLUNGSMONITOR UND STRAHLUNGSÜBERWACHUNGSVERFAHREN
DISPOSITIF DE SURVEILLANCE DE RAYONNEMENT ET PROCÉDÉ DE SURVEILLANCE DE RAYONNEMENT

(30) Priority: 11.12.2014 JP 2014251334
(43) Date of publication of application: 18.10.2017
(73) Proprietor: Hitachi, Ltd., Tokyo 100-8280 (JP)
(72) Inventor: TADOKORO Takahiro, Tokyo 100-8280 (JP); TOMINAGA Kazuo, Tokyo 100-8280 (JP); UENO Katsunori, Tokyo 100-8280 (JP); OKADA Kouichi, Tokyo 100-8280 (JP); NAGUMO Yasushi, Tokyo 100-8280 (JP); KUWABARA Hitoshi, Tokyo 100-8280 (JP); SASAKI Keisuke, Tokyo 100-8280 (JP)
(74) Representative: Mewburn Ellis LLP
(86) International application number: PCT/JP2015/083306
(87) International publication number: WO 2016/093074

(56) References cited:
- WO-A1-2005/008287
- WO-A1-2005/008287
- WO-A1-2012/036570
- JP-A- H02 236 191
- JP-A- 2001 056 381
- JP-A- 2002 082 171
- JP-A- 2013 160 614
- JP-U- S6 072 585
- JP-U- S6 249 779
- US-A1- 2014 252 238
- MONES E ET AL: "Ce-doped optical fibre as radioluminescent dosimeter in radiotherapy", RADIATION MEASUREMENTS, ELSEVIER, AMSTERDAM, NL, vol. 43, no. 2-6, 1 February 2008 (2008-02-01), pages 888-892, XP022733932, ISSN: 1350-4487, DOI: 10.1016/J.RADMEAS.2008.01.031 [retrieved on 2008-02-14]
- VEDDA A ET AL: "Ce3+-doped fibers for remote radiation dosimetry", APPLIED PHYSICS LETTERS, A I P PUBLISHING LLC, US, vol. 85, no. 26, 1 January 2004 (2004-01-01), pages 6356-6358, XP012063936, ISSN: 0003-6951, DOI: 10.1063/1.1840127

## Description

### Technical Field

The present invention relates to a radiation monitor and a radiation monitoring method.

### Background Art

As a monitor for measuring the dose rate of radiation, a radiation monitor using an ionization chamber and a radiation monitor using a scintillation element are known.

The above-described radiation monitor using the ionization chamber uses the ionization of a gas in the ionization chamber caused by the incident radiation, and can simply measure the dose rate of the radiation by measuring a current generated by the application of a voltage to the ionization chamber.

Meanwhile, the radiation monitor using the scintillation element uses the light emission from the element caused by the incident radiation. Specifically, the radiation monitor measures the intensity of the emitted light as a current using a photomultiplier tube or the like and calculates the dose rate from the current value (for example, see PTL 1).

### Citation List

### Patent Literature

PTL 1: Japanese Patent Application Laid-Open No. 2009-36752
PTL 2: PCT Application WO2012/036570 A1 discloses a Radiation dosimeter detection system and method
PTL 3: PCT Application WO 2005/008287 A1 discloses a Thermal neutron flux monitor
PTL 4: Patent publication US2014/0252238 A1 discloses a device for the determination of an irradiation dose comprising a scintillator composed of yttrium aluminium garnet doped with cerium.

### Summary of Invention

### Technical Problem

However, in the above-described radiation monitor using the ionization chamber, it is essential to enlarge the ionization chamber when measuring radiation at a low dose rate due to a small interaction between radiation and gas. In addition, there is a risk of explosion or the like under the presence of hydrogen or the like due to the application of a high voltage. Therefore, it is difficult to apply the radiation monitor.

Further, in the above-described radiation monitor using the conventional scintillation element, since electrical signals overlap each other when a high dose rate is measured, it is difficult to correctly measure the dose rate. In order to avoid this problem, it is conceivable to cover the periphery of the above-described element with a radiation shield such as a lead. However, since the radiation monitor becomes very large and heavy, it is difficult to mention that the simplicity of measurement is always sufficient.

The invention has been made in view of the above-described circumstances and an object of the invention is to provide a radiation monitor and a radiation monitoring method capable of simply and accurately measuring the dose rate of radiation by suppressing the risk of explosion or the like.

### Solution to Problem

The invention to solve the above issue is a radiation monitor as set forth in claim 1.

A radiation monitoring method is set forth in claim 8.

The radiation monitor further includes a wavelength filter which is provided in the middle of the optical fiber and allows a transmission of only light within a predetermined wavelength range.

The radiation monitor preferably further includes a light attenuation filter which is provided in the middle of the optical fiber and attenuates the light emitted from the radiation emitting element at a predetermined ratio so as to fall within a predetermined intensity range.

In the radiation monitor, the radiation emitting element includes a light emitting part, a housing which receives the light emitting part, and an intermediate member that is provided between the housing and the light emitting part and has a thermal emissivity smaller than a thermal emissivity of an inner surface of the housing.

In the radiation monitor, the light emitting part preferably contains at least one rare earth element.

In the radiation monitor, the radiation emitting element is preferably received in a virtual area in which an outer shape of the optical fiber at a connection portion between the radiation emitting element and the optical fiber is extended in an axial direction of the optical fiber.

Another aspect to solve the above issue is a radiation monitor as set forth in claim 5.

The radiation monitor further includes: a first wavelength filter which is provided in the middle of the first optical fiber and allows a transmission of only light within a predetermined wavelength range; and a second wavelength filter which is provided in the middle of the second optical fiber and allows a transmission of only light within the predetermined wavelength range.

The radiation monitor preferably further includes: a first light attenuation filter which is provided in the middle of the first optical fiber and attenuates the light emitted from the first radiation emitting element at a predetermined ratio as to fall within a predetermined intensity range; and a second light attenuation filter which is provided in the middle of the second optical fiber and attenuates the light emitted from the second radiation emitting element at the predetermined ratio so as to fall within the predetermined intensity range.

In the radiation monitor, the first radiation emitting element further includes a first light emitting part, a first housing which receives the first light emitting part, and a first intermediate member that is provided between the first housing and the first light emitting part and has a thermal emissivity smaller than a thermal emissivity of an inner surface of the first housing, and the second radiation emitting element preferably includes a second light emitting part, a second housing which receives the second light emitting part, and a second intermediate member that is provided between the second housing and the second light emitting part and has a thermal emissivity smaller than a thermal emissivity of an inner surface of the second housing.

In the radiation monitor, the first radiation emitting element is preferably received in a virtual area in which an outer shape of the first optical fiber at a connection portion between the first radiation emitting element and the first optical fiber is extended in an axial direction of the first optical fiber, and the second radiation emitting element is preferably received in a virtual area in which an outer shape of the second optical fiber at a connection portion between the second radiation emitting element and the second optical fiber is extended in an axial direction of the second optical fiber.

Additionally, the "electric pulse count rate" in the specification means the number of the electric pulses detected per unit time. Further, a "predetermined wavelength range" in the specification means a predetermined light wavelength range used to measure the radiation dose rate and specifically means a specific wavelength range in which light can be transmitted through the wavelength filter used in the radiation monitor. Further, a "predetermined intensity range" in the specification means a light intensity range in which one photon can be converted into one electric pulse which can be resolved in time by using the electric pulse converter used in the radiation monitor. Further, a "predetermined ratio" in the specification means a predetermined ratio (a conversion ratio) for attenuating (converting) the intensity of light and specifically means a ratio of the intensity of light having passed through the light attenuation filter with respect to light not having passed through the intensity of light attenuation filter.

### Advantageous Effects of Invention

The invention can provide a radiation monitor capable of simply and accurately measuring the dose rate of radiation by suppressing the risk of explosion or the like.

### Brief Description of Drawings

[FIG. 1] FIG. 1 is a schematic block diagram illustrating a first embodiment of a radiation monitor of the invention.
[FIG. 2] FIG. 2 is a schematic enlarged cross-sectional view of a radiation emitting element of the radiation monitor of FIG. 1.
[FIG. 3] FIG. 3 is a partially enlarged schematic diagram illustrating a preferred embodiment of the radiation emitting element of the radiation monitor of FIG. 1.
[FIG. 4] FIG. 4 is a schematic diagram illustrating an example of a relation between a radiation dose rate and the number of generated photons per unit time.
[FIG. 5] FIG. 5 is a schematic diagram illustrating a process of generating photons (light) by incident radiation.
[FIG. 6] FIG. 6 is a schematic diagram illustrating one use example of the radiation monitor of FIG. 1.
[FIG. 7] FIG. 7 is a schematic diagram illustrating another use example of the radiation monitor of FIG. 1.
[FIG. 8] FIG. 8 is a schematic block diagram illustrating a second embodiment of a radiation monitor of the invention.
[FIG. 9] FIG. 9 is a schematic diagram illustrating an example of a generation rate of each photon (light) generated by the radiation emitting element at the time of incidence of y rays of a certain wavelength.
[FIG. 10] FIG. 10 is a schematic block diagram illustrating a third embodiment of a radiation monitor of the invention.
[FIG. 11] FIG. 11 is a schematic block diagram illustrating a fourth embodiment of a radiation monitor of the invention.
[FIG. 12] FIG. 12 is a schematic diagram illustrating a correction of a dose rate in the radiation monitor of FIG. 11.

### Description of Embodiments

A radiation monitor of the invention includes: a radiation emitting element which includes a light emitting part emitting light of an intensity corresponding to a dose rate of incident radiation; an optical fiber which is connected to the radiation emitting element and transmits the light emitted from the light emitting part; an electric pulse converter which is connected to the optical fiber and transmits one electric pulse for one photon of the transmitted light; an electric pulse detector which is connected to the electric pulse converter and counts the electric pulse transmitted from the electric pulse converter; and an analyzer which is connected to the electric pulse detector and converts the electric pulse count rate obtained by the electric pulse detector into a radiation dose rate.

Further, a radiation monitor of the invention includes: a first radiation emitting element which includes a first light emitting part containing at least one rare earth element and emitting light of an intensity corresponding to a dose rate of incident radiation; a first optical fiber which is connected to the first radiation emitting element and transmits the light emitted from the first light emitting part; a first electric pulse converter which is connected to the first optical fiber and transmits one electric pulse for one photon of the transmitted light; a first electric pulse detector which is connected to the first electric pulse converter and counts the electric pulse transmitted from the first electric pulse converter; a second radiation emitting element which includes a second light emitting part not containing a rare earth element; a second optical fiber which is connected to the second radiation emitting element and transmits light emitted from the second light emitting part; a second electric pulse converter which is connected to the second optical fiber and transmits one electric pulse for one photon of the transmitted light; a second electric pulse detector which is connected to the second electric pulse converter and counts the electric pulse transmitted from the second electric pulse converter; and a differential analyzer which is connected to the first and second electric pulse detectors, calculates a difference in electric pulse count rate from the electric pulses counted by the first and second electric pulse detectors, and converts the difference into a radiation dose rate, wherein the first radiation emitting element and the second radiation emitting element are provided to be adjacent to each other.

Hereinafter, a radiation monitor of an embodiment of the invention will be described with reference to the drawings, but the invention is not limited to the description of the embodiment.

### [First Embodiment]

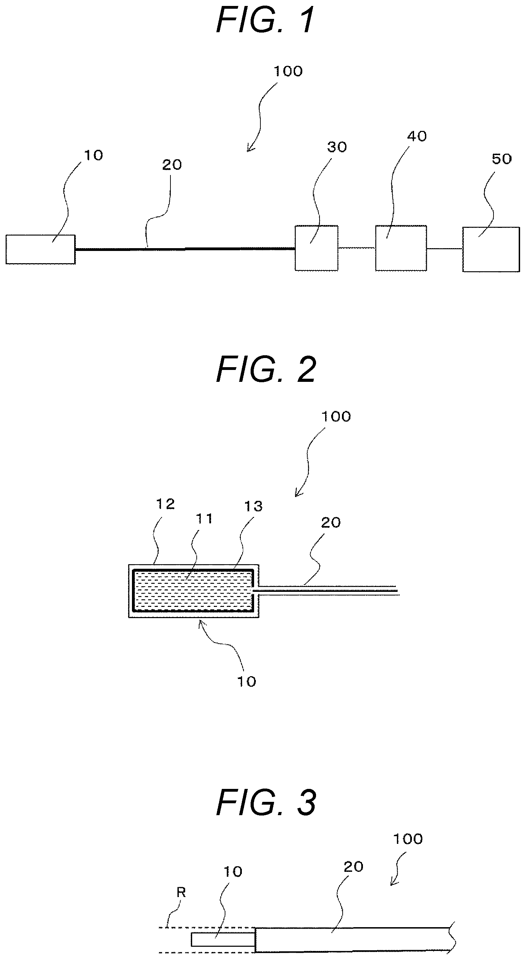

FIG. 1 is a schematic block diagram illustrating a first embodiment of the radiation monitor of the invention. As illustrated in FIG. 1, a radiation monitor 100 schematically includes a radiation emitting element 10, an optical fiber 20, an electric pulse converter 30, an electric pulse detector 40, and an analyzer 50. Additionally, examples of radiation that can be measured by the radiation monitor 100 include electromagnetic waves such as X-rays and γ-rays, particle beams such as α-rays, β-rays, and neutron rays, and the like.

The radiation emitting element 10 is an element that includes a light emitting part 11 emitting light having an intensity corresponding to the dose rate of incident radiation. The radiation emitting element 10 includes, as illustrated in FIG. 2, a light emitting part 11, a housing 12, and an intermediate member 13.

The light emitting part 11 contains at least one rare earth element. Specifically, the light emitting part 11 is formed of, for example, a light transmitting material such as transparent yttrium aluminum garnet as a base material and rare earth elements such as ytterbium, neodymium, cerium, and praseodymium contained in the light transmitting material.

In this way, since the light emitting part 11 contains at least one rare earth element, the linearity of the dose rate of the incident radiation in the light emitting part 11 and the intensity of the light can be improved. Thus, the radiation monitor 100 can more accurately measure the dose rate of radiation even when radiation of a high dose rate is incident.

The housing 12 is a container that receives the light emitting part 11. The material forming the housing 12 is not particularly limited as long as the material can transmit the radiation to be measured, and for example, aluminum or the like can be adopted.

The intermediate member 13 is a member that is provided between the housing 12 and the light emitting part 11 and has a thermal emissivity smaller than the thermal emissivity of the inner surface of the housing 12. In the embodiment, the intermediate member 13 is laminated as a mirror-like thin film on the inner surface of the housing 12. As the material forming the intermediate member 13, for example, gold, silver, and the like can be exemplified.

In this way, since the radiation emitting element 10 includes the intermediate member 13, the light emission derived from the heat radiation generated in the housing 12 can be reduced even when the radiation emitting element 10 is placed in a high temperature environment and thus the dose rate of radiation can be measured more accurately.

As illustrated in FIG. 3, it is preferable that the radiation emitting element 10 be received in a virtual region R in which an outer shape of the optical fiber 20 at a connection portion between the radiation emitting element 10 and the optical fiber 20 is extended in the axial direction of the optical fiber 20. Therefore, since it is possible to prevent a case in which a radiation measurement place is restricted by the size of the radiation emitting element 10, for example, the radiation monitor can be used to measure the details and to measure a high dose rate and a high spatial resolution in combination with a medical radiotherapy apparatus.

The optical fiber 20 is a medium which is connected to the radiation emitting element 10 and transmits light emitted from the light emitting part 11. The optical fiber 20 is connected to the radiation emitting element 10 and the electric pulse converter 30 to be described later. As the material forming the optical fiber 20, for example, quartz, plastics, and the like can be exemplified, but quartz is preferable from the viewpoint of prevention of deterioration under a high dose rate and long distance transmission.

The electric pulse converter 30 is a converter which connected to the optical fiber 20 and emits one electric pulse for each photon of the transmitted light. As the electric pulse converter 30, for example, a photomultiplier tube, an avalanche photodiode, or the like can be adopted. By using the photomultiplier tube or the like, it is possible to convert light (photon) into electric pulses having amplified current.

The electric pulse detector 40 is a detector which is connected to the electric pulse converter 30 and counts the electric pulse output from the electric pulse converter 30. As the electric pulse detector 40, for example, an oscilloscope or the like can be adopted.

The analyzer 50 is a device which is connected to the electric pulse detector 40 and converts the electric pulse count rate obtained by the electric pulse detector 40 into the radiation dose rate. Specifically, the analyzer 50 includes a storage device which stores a database indicating a correspondence between the electric pulse count rate and the radiation dose rate, a calculation device which converts the electric pulse count rate used in the database into the radiation dose rate, and a display device which displays the radiation dose rate (not illustrated) . The analyzer 50 is not particularly limited as long as the electric pulse count rate can be converted into the radiation dose rate, and for example, a personal computer having the above-described function can be adopted.

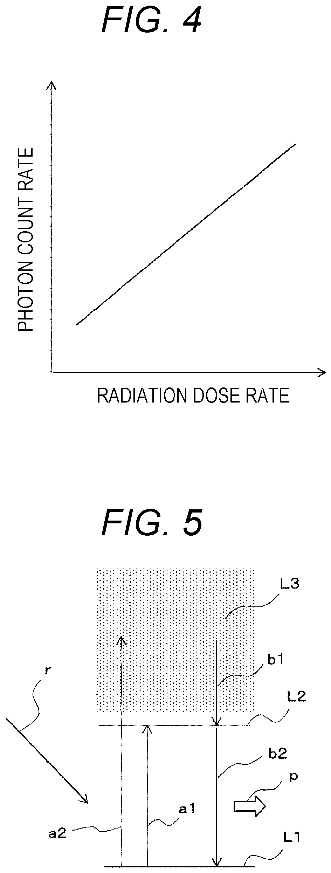

As illustrated in FIG. 4, the inventors found that there is a one-to-one correspondence between the dose rate of incident radiation and the number of photons per unit time (hereinafter also referred to as a "photon count rate") emitted from the radiation emitting element 10 by experiment. On the other hand, it is known that there is a one-to-one correspondence between the photon count rate and the electric pulse count rate. Therefore, since there is also a one-to-one correspondence between the radiation dose rate and the electric pulse count rate, the obtained electric pulse count rate can be converted into the radiation dose rate by using this correspondence.

Here, since the correspondence between the radiation dose rate and the electric pulse count rate is different depending on the size and the shape of the radiation emitting element 10 to be used or the thickness or length of the optical fiber 20, the obtained electric pulse count rate can be converted into the radiation dose rate when the correspondence is obtained in advance for each radiation monitor in the form of a database. Additionally, a result derived from the analyzer 50 is not limited to the radiation dose rate and may be, for example, a change in dose rate with time or the like.

Next, the operation of the radiation monitor 100 will be described. FIG. 5 is a schematic diagram illustrating a process of generating photons (light) by incident radiation. As illustrated in FIG. 5, when the radiation r is incident to the radiation emitting element 10, the rare earth atoms and the like in the light emitting part 11 in the radiation emitting element 10 enter an excited state (for example, energy levels L2 and L3) of which energy is high due to the energy possessed by the radiation r (see the arrows a1 and a2 of FIG. 5).

Meanwhile, when the rare earth atoms and the like which are in the excited state (for example, the energy levels L2 and L3) of which energy is high enter an excited state of which energy is low or a ground state (for example, energy levels L1 and L2) (see the arrows b1 and b2 in FIG. 5), photon p (light) having energy corresponding to an energy difference is generated.

The photon p (light) which is generated in this way is transmitted to the electric pulse converter 30 through the optical fiber 20 to be converted into the electric pulse in the electric pulse converter 30. Next, the number of the electric pulses converted by the electric pulse converter 30 is counted by the electric pulse detector 40 and the obtained electric pulse count rate is converted into the radiation dose rate in combination with the database using the analyzer 50, thereby obtaining the dose rate of the incident radiation.

In this way, since the radiation monitor 100 includes the radiation emitting element 10, the optical fiber 20, the electric pulse converter 30, the electric pulse detector 40, and the analyzer 50, the incident radiation can be measured as the electric pulse count rate (the photon count rate) and thus the radiation dose rate can be simply and accurately measured. Further, since the radiation monitor 100 has the above-described configuration, it is possible to suppress the risk of explosion or the like to a degree in which a high voltage is not applied.

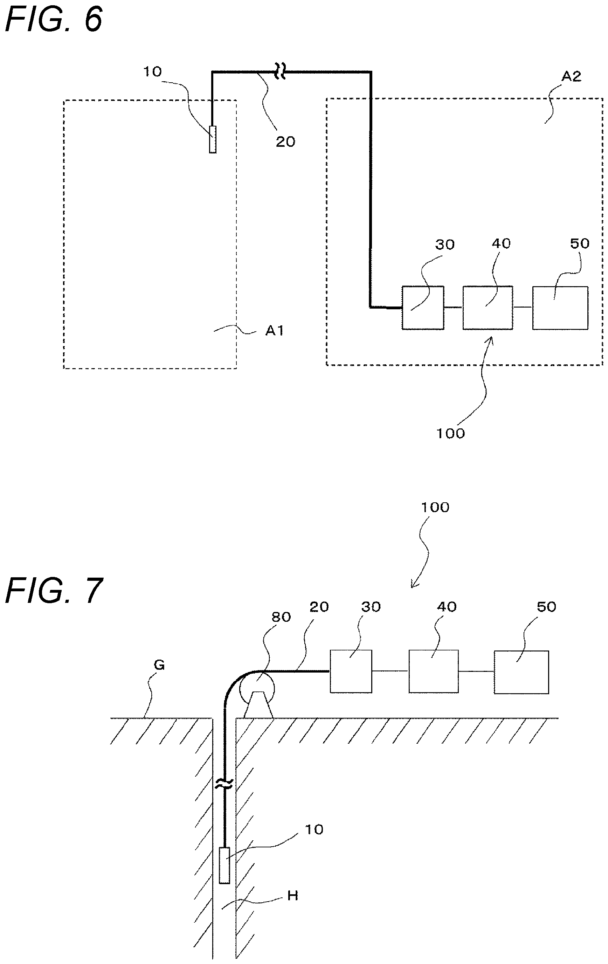

Next, a preferred use example of the radiation monitor 100 will be described. FIG. 6 is a schematic diagram illustrating one use example of the radiation monitor of FIG. 1. In this use example, the radiation emitting element 10 is provided inside a measurement area A1, the electric pulse converter 30, the electric pulse detector 40, and the analyzer 50 are provided outside a measurement area A2, and the radiation emitting element 10 and the electric pulse converter 30 are connected to each other by the optical fiber 20. For example, a harsh environment such as a high dose rate, a high temperature, a hydrogen/oxygen atmosphere, and the like is assumed inside the measurement area A1 like a nuclear reactor building. Here, since the radiation emitting element 10 and the optical fiber 20 which do not need the application of a voltage and have excellent heat resistance and radiation resistance are provided inside the measurement area A1, the risk of explosion or the like can be further suppressed.

Further, FIG. 7 is a schematic diagram illustrating another use example of the radiation monitor of FIG. 1. In this use example, a radiation dose rate is measured at some positions in the depth direction of a hole H opened to a ground G. When such a measurement is performed, the radiation emitting element 10 needs to be moved in the depth direction. Here, when an optical fiber winding machine 80 capable of adjusting a supply length of the optical fiber 20 is provided and the radiation emitting element 10 is moved in the depth direction of the hole H, the radiation dose rate on the ground can be measured. Additionally, the radiation emitting element 10 may be mounted on a movement device (not illustrated) to measure a dose rate of an arbitrary area.

### [Second Embodiment]

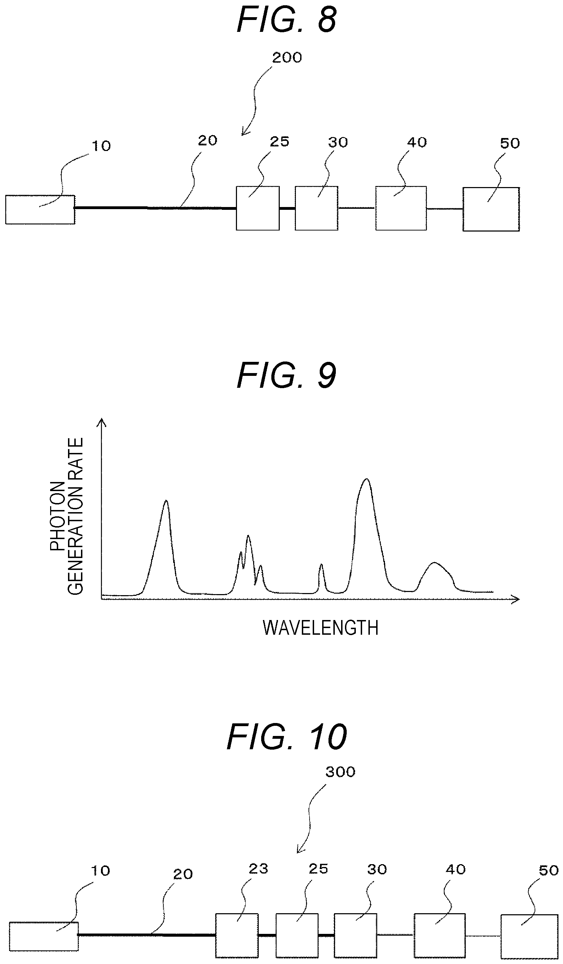

FIG. 8 is a schematic block diagram illustrating a second embodiment of the radiation monitor of the invention. As illustrated in FIG. 8, a radiation monitor 200 schematically includes a radiation emitting element 10, an optical fiber 20, a wavelength filter 25, an electric pulse converter 30, an electric pulse detector 40, and an analyzer 50. The second embodiment is different from the first embodiment in that the wavelength filter 25 is further provided. Further, since the radiation emitting element 10, the optical fiber 20, the electric pulse converter 30, the electric pulse detector 40, and the analyzer 50 are the same as those of the first embodiment, the same reference numerals will be given to the same components and a detailed description thereof will be omitted.

The wavelength filter 25 is a filter which is provided in the middle of the optical fiber 20 and allows the transmission of only light within a predetermined wavelength range. The wavelength filter 25 is not particularly limited as long as the wavelength filter can transmit only light within a predetermined wavelength range. For example, an interference filter which is formed by coating a dielectric film on a planar substrate and uses an interference phenomenon of reflected light generated at the interface of the thin film can be adopted.

Next, the reason why the wavelength range that can be transmitted by the wavelength filter 25 is limited to the predetermined wavelength range will be described. When a rare earth atom or the like excited to a high energy level by incident radiation changes to a lower energy level, light (photon) having a wavelength corresponding to a difference in energy between transition energy levels is generated (see FIG. 5). FIG. 9 illustrates an example of the generation rate of each photon (light) generated by the radiation emitting element at the time of incidence of y rays of a certain wavelength for each wavelength. As can be seen from this drawing, light of various wavelengths (photons) is generated by the incidence of the y ray.

However, since the optical fiber 20 is deteriorated under a high dose rate environment, light of a relatively short wavelength becomes difficult to transmit due to scattering and absorption. Therefore, when only light transmitted through the wavelength filter 25 is transmitted to the electric pulse converter 30 by using the wavelength filter 25 that transmits only light of a relatively long wavelength which hardly causes scattering or the like, it is possible to measure only light of a relatively long wavelength which is not affected by the deterioration of the optical fiber and to measure the dose rate of radiation with high accuracy.

Meanwhile, since a relatively long wavelength of light is generated by heat radiation even within the radiation emitting element 10 and the optical fiber 20 under a high temperature environment, it is difficult to distinguish the light generated by the incident radiation. Therefore, when only the light transmitted through the wavelength filter 25 is transmitted to the electric pulse converter 30 by using the wavelength filter 25 that transmits only the light having a relatively short wavelength and not generated by the heat radiation in a high temperature environment, it is possible to measure only the light of a relatively short wavelength that is not affected by the radiation and to accurately measure the dose rate of the radiation.

The above-described predetermined wavelength range is equal to or larger than 700 nm and equal to or smaller than 1,300 nm in the case of the measurement under a high dose rate environment and a high temperature environment. The lower limit of the above-described predetermined wavelength range is preferably 800 nm and more preferably 900 nm from the viewpoint of improving the scattering prevention of the light transmitted through the optical fiber 20. Further, the upper limit of the above-described wavelength range is preferably 1,200 nm and more preferably 1,100 nm from the viewpoint of improving the suppression of light caused by heat radiation. In addition, when measuring a low dose rate environment in a high temperature environment of 300°C or more, the wavelength is preferably 1,200 nm or less and the shorter wavelength is more preferable. When measuring a high dose rate in a room temperature environment, the wavelength is preferably equal to or larger than 800 nm and equal to or smaller than 2,500 nm from the viewpoint of improving the scattering prevention of the light transmitted through the optical fiber 20.

Additionally, since the operation of the radiation monitor 200 is the same as that of the radiation monitor 100 except that only light within a predetermined wavelength is transmitted using the wavelength filter 25, a description thereof will be omitted.

In this way, since the radiation monitor 200 includes the wavelength filter 25, the radiation dose rate can be measured by using only light of a predetermined wavelength range and thus the radiation dose rate can be more accurately measured even when the optical fiber is deteriorated or the environmental temperature is high.

### [Third Embodiment]

FIG. 10 is a schematic block diagram illustrating a third embodiment of the radiation monitor of the invention. As illustrated in FIG. 10, a radiation monitor 300 schematically includes a radiation emitting element 10, an optical fiber 20, a light attenuation filter 23, a wavelength filter 25, an electric pulse converter 30, an electric pulse detector 40, and an analyzer 50. The third embodiment is different from the second embodiment in that the light attenuation filter 23 is further provided. Additionally, since the radiation emitting element 10, the optical fiber 20, the wavelength filter 25, the electric pulse converter 30, the electric pulse detector 40, and the analyzer 50 are the same as those of the second embodiment, the same reference numerals will be given to the same components and a detailed description thereof will be omitted.

The light attenuation filter 23 is a filter which is provided in the middle of the optical fiber 20 and attenuates (converts) light emitted from the radiation emitting element 10 at a predetermined ratio so as to fall within a predetermined intensity range. The light attenuation filter 23 is not particularly limited as long as light can be attenuated (converted) within a predetermined intensity range at a predetermined ratio. For example, a neutral density (ND) filter or the like can be adopted. The light attenuation filter 23 is preferably used when the dose rate exceeds the upper limit of the photon count rate converted in the electric pulse converter 30.

Additionally, since the operation of the radiation monitor 300 is the same as that of the radiation monitor 100 except that the intensity of light transmitted by the optical fiber 20 is attenuated at a predetermined ratio so as to fall within a predetermined intensity range using the light attenuation filter 23, a description thereof will be omitted.

In this way, since the radiation monitor 300 includes the light attenuation filter 23, the radiation dose rate can be more accurately measured even when radiation having a high dose rate exceeding a time resolution of the electric pulse converter 30 is incident.

### [Fourth Embodiment]

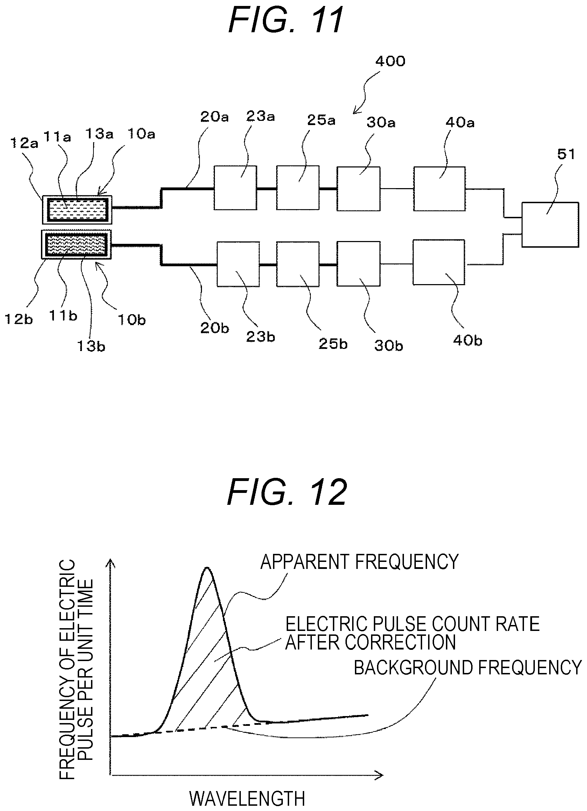

FIG. 11 is a schematic block diagram illustrating a fourth embodiment of the radiation monitor of the invention. As illustrated in FIG. 11, a radiation monitor 400 schematically includes a first radiation emitting element 10a, a first optical fiber 20a, a first light attenuation filter 23a, a first wavelength filter 25a, a first electric pulse converter 30a, a first electric pulse detector 40a, a second radiation emitting element 10b, a second optical fiber 20b, a second light attenuation filter 23b, a second wavelength filter 25b, a second electric pulse converter 30b, a second electric pulse detector 40b, and a differential analyzer 51.

The first optical fiber 20a is a medium which is connected to the first radiation emitting element 10a and transmits light emitted from the first light emitting part 11a. Further, the second optical fiber 20b is a medium which is connected to the second radiation emitting element 10b and transmits light emitted from the second light emitting part 11b.

The first light attenuation filter 23a is a filter which is provided in the middle of the first optical fiber 20a and attenuates light emitted from the first radiation emitting element 10a at a predetermined ratio so as to fall within a predetermined intensity range. Further, the second light attenuation filter 23b is a filter which is provided in the middle of the second optical fiber 20b and attenuates the light emitted from the second radiation emitting element 10b at a predetermined ratio so as to fall within a predetermined intensity range.

The first wavelength filter 25a is a filter which is provided in the middle of the first optical fiber 20a and allows the transmission only light within a predetermined wavelength range. Further, the second wavelength filter 25b is a filter which is provided in the middle of the second optical fiber 20b and allows the transmission of only light within a predetermined wavelength range.

The first electric pulse converter 30a is a converter which is connected to the first optical fiber 20a and transmits one electric pulse for one photon of the transmitted light. Further, the second electric pulse converter 30b is a converter which is connected to the second optical fiber 20b and transmits one electric pulse for one photon of the transmitted light.

The first electric pulse detector 40a is a detector which is connected to the first electric pulse converter 30a and counts the electric pulse transmitted from the first electric pulse converter 30a. Further, the second electric pulse detector 40b is a converter which is connected to the second electric pulse converter 30b and counts the electric pulse transmitted from the second electric pulse converter 30b.

Additionally, since the first and second optical fibers 20a and 20b are the same as the optical fiber 20, the first and second light attenuation filters 23a and 23b are the same as the light attenuation filter 23, the first and second wavelength filters 25a and 25b are the same as the wavelength filter 25, the first and second electric pulse converters 30a and 30b are the same as the electric pulse converter 30, and the first and second electric pulse detectors 40a and 40b are the same as the electric pulse detector 40, a detailed description thereof will be omitted.

The first radiation emitting element 10a includes a first light emitting part 11a, a first housing 12a which receives the first light emitting part 11a, and a first intermediate member 13a that is provided between the first housing 12a and the first light emitting part 11a and has a thermal emissivity smaller than a thermal emissivity of an inner surface of the first housing 12a and the second radiation emitting element 10b includes a second light emitting part 11b, a second housing 12b which receives the second light emitting part 11b, and a second intermediate member 13b which is provided between the second housing 12b and the second light emitting part 12b and has a thermal emissivity smaller than a thermal emissivity of an inner surface of the second housing 12b. Accordingly, since the light emission derived from the heat radiation generated in the first and second housings 12a and 12b can be reduced even when the first and second radiation emitting elements 10a and 10b are under the high temperature environment, the radiation dose rate can be more accurately measured. Additionally, since the first light emitting part 11a is the same as the light emitting part 11, the first and second housings 12a and 12b are the same as the housing 12, and the first and second intermediate members 13a and 13b are the same as the intermediate member 13, a detailed description thereof will be omitted.

The second light emitting part 11b is a light emitting part which does not contain a rare earth element. The second light emitting part 11b is different from the first light emitting part 11a in that the rare earth element is not contained. That is, the second light emitting part 11b is formed of, for example, a light transmitting material such as transparent yttrium aluminum garnet.

Further, as illustrated in FIG. 11, the first radiation emitting element 10a and the second radiation emitting element 10b are provided to be adjacent to each other. Additionally, a state where the first radiation emitting element 10a and the second radiation emitting element 10b are adjacent to each other is not particularly limited as long as the first and second radiation emitting elements 10a and 10b have the same radiation dose rate.

The differential analyzer 51 is a device which is connected to the first and second electric pulse detectors 40a and 40b, calculates a difference in electric pulse count rate from the electric pulses counted by the first and second electric pulse detectors 40a and 40b, and converts the difference into the radiation dose rate. Specifically, the differential analyzer 51 includes, for example, a storage device which is described in the section of the "first Embodiment", a calculation device which calculates a difference in electric pulse count rate obtained by the first and second electric pulse detectors 40a and 40b and converts the difference into the radiation dose rate by using a database, and a display device which displays the converted radiation dose rate (not illustrated). The differential analyzer 51 is not particularly limited as long as the electric pulse counted by the first and second electric pulse detectors 40a and 40b can be converted into the radiation dose rate as described above. For example, a personal computer having the above-described function can be adopted.

Additionally, similarly to the radiation emitting element 10 illustrated in FIG. 3, the first radiation emitting element 10a is preferably received in a virtual area in which an outer shape of the first optical fiber 20a at a connection portion between the first radiation emitting element 10a and the first optical fiber 20a is extended in the axial direction of the first optical fiber 20a and the second radiation emitting element 10b is preferably received in a virtual area in which an outer shape of the second optical fiber 20b at a connection portion between the second radiation emitting element 10b and the second optical fiber 20b is extended in the axial direction of the second optical fiber 20b. Accordingly, since it is possible to prevent a case in which the radiation measurement place is restricted by the sizes of the first and second radiation emitting elements 10a and 10b, for example, the radiation monitor can be used to measure the details and to measure a high dose rate and a high spatial resolution in combination with a medical radiotherapy apparatus.

Next, the operation of the radiation monitor 400 will be described. When the radiation dose rate is measured by using the radiation monitor 400, the first radiation emitting element 10a and the second radiation emitting element 10b are provided to be adjacent to each other. Therefore, environments involving with an incident radiation dose rate, a temperature, and an electric noise are the same in the first and second radiation emitting elements 10a and 10b.

When radiation is incident to the first radiation emitting element 10a, a photon (light) is generated at the energy transition of the rare earth element in the first light emitting part 11a. Next, the photon (light) passes through the first light attenuation filter 23a and the first wavelength filter 25a provided in the middle of the optical fiber 20a and is converted into an electric pulse in the first electric pulse converter 30a. Then, the electric pulse is counted by the first electric pulse detector 40a. At that time, there is concern that the frequency of the electric pulse per unit time with respect to the wavelength may include a frequency of a background electric pulse (hereinafter, also referred to as a "background frequency") not caused by the radiation such as a photon generated by a heat radiation or an electric noise generated in the electric pulse converter 30 as indicated by the solid line (the apparent frequency) of FIG. 12.

Meanwhile, when the radiation is incident to the second radiation emitting element 10b, the electric pulse is counted by the second electric pulse detector 40b as described above. However, since the second light emitting part 11b does not include the rare earth element, the second electric pulse converter 30b does not emit the electric pulse caused by the rare earth element and the frequency of the electric pulse per unit time with respect to the wavelength is only the background frequency as indicated by the dashed line of FIG. 12.

Here, the electric pulse count rate obtained by the second radiation emitting element 10b is deducted from the electric pulse count rate obtained by the first radiation emitting element 10a and the difference is set as the corrected electric pulse count rate (corresponding to the integral value of the frequency of the electric pulse per unit time with respect to the wavelength indicated by the hatching of FIG. 12). Next, when the corrected electric pulse count rate is combined with a database and is converted into the radiation dose rate, the incident radiation dose rate is obtained.

In this way, since the differential analyzer 51 is provided and the first radiation emitting element 10a with the rare earth element and the second radiation emitting element 10b without the rare earth element are provided to be adjacent to each other, the radiation dose rate can be more accurately measured by removing, for example, a background such as a light emission caused by a heat radiation or an electric noise.

Further, since the radiation monitor 400 includes the first and second wavelength filters 25a and 25b, the radiation dose rate can be measured by using only the light of a predetermined wavelength range and thus the radiation dose rate can be more accurately measured even when the optical fiber is deteriorated or is under the high temperature environment.

Further, since the radiation monitor 400 includes the first and second light attenuation filters 23a and 23b, the radiation dose rate can be more accurately measured even when radiation of a high dose rate exceeding the time resolution of the electric pulse converter 30 is incident.

It should be noted that the radiation monitor of the invention is not limited to the configuration of the above-described embodiments, but includes all changes within the scope as indicated by the scope of the claims.

For example, in the first to third embodiments, a case has been described in which the light emitting part 11 contains at least one rare earth element, but, according to an example which does not form part of the claimed invention, does not need to essentially contain the rare earth element as long as the light emitting part can emit light of an intensity corresponding to the dose rate of the incident radiation.

Further, in the first to third embodiments, the radiation monitor in which the electric pulse detector 40 and the analyzer 50 are separated from each other has been described, but a single measurement device having a function of counting an electric pulse and a function of converting an electric pulse count rate into a radiation dose rate is also within the intended scope of the invention.

Further, in the fourth embodiment, the radiation monitor 400 including the first and second light attenuation filters 23a and 23b has been described, but a radiation monitor not including these components may be used.

Further, in the fourth embodiment, the radiation monitor 400 including the first and second wavelength filters 25a and 25b has been described, but a radiation monitor not including these components may be used.

Further, in the fourth embodiment, the radiation monitor 400 in which the first light emitting part 11a and the second light emitting part 11b are received in different housings 12a and 12b has been described, but a radiation monitor in which the first and second light emitting parts 11a and 11b are received in a single housing and the first and second light emitting parts 11a and 11b are divided by a light shielding member may be used.

Further, in the fourth embodiment, the radiation monitor 400 including the first and second intermediate members 13a and 13b and the first and second housings 12a and 12b has been described, but a radiation monitor not including the first and second intermediate members 13a and 13b or a radiation monitor not including the first and second intermediate members 13a and 13b and the first and second housings 12a and 12b may be used. Reference Signs List

- 100, 200, 300, 400: radiation monitor
- 10: radiation emitting element
- 10a: first radiation emitting element
- 10b: second radiation emitting element
- 11: light emitting part
- 11a: first light emitting part
- 11a: second light emitting part
- 12: housing
- 12a: first housing
- 12b: second housing
- 13: intermediate member
- 13a: first intermediate member
- 13b: second intermediate member
- 20: optical fiber
- 20a: first optical fiber
- 20b: second optical fiber
- 23: light attenuation filter
- 23a: first light attenuation filter
- 23b: second light attenuation filter
- 25: wavelength filter
- 25a: first wavelength filter
- 25b: second wavelength filter
- 30: electric pulse converter
- 30a: first electric pulse converter
- 30b: second electric pulse converter
- 40: electric pulse detector
- 40a: first electric pulse detector
- 40b: second electric pulse detector
- 50: analyzer
- 51: differential analyzer
- r: radiation
- R: virtual area

## Claims

1. A radiation monitor (100) comprising:
a radiation emitting element (10) which includes a light emitting part (11) configured to emit light, and of an intensity corresponding to a dose rate of incident radiation;
an optical fiber (20) which is connected to the radiation emitting element (10) and transmits the light emitted from the light emitting part (11);
an electric pulse converter (30) which is connected to the optical fiber (20) and transmits one electric pulse for one photon of the transmitted light;
an electric pulse detector (40) which is connected to the electric pulse converter and counts the electric pulse transmitted from the electric pulse converter;
an analyzer (50) which is connected to the electric pulse detector and converts the electric pulse count rate obtained by the electric pulse detector into a radiation dose rate; and
a wavelength filter (25) which is provided in the middle of the optical fiber (20) and allows a transmission of only light within a predetermined wavelength range;
wherein the radiation emitting element (10) includes a light emitting part (11), a housing (12) which receives the light emitting part (11), and an intermediate member (13) that is provided between the housing (12) and the light emitting part (11) and has a thermal emissivity smaller than a thermal emissivity of an inner surface of the housing (12),
wherein the light emitting part (11) is formed of transparent yttrium aluminum garnet as a base material and rare earth elements contained in the light transmitting material.

2. The radiation monitor (300) according to claim 1, further comprising:
a light attenuation filter (23) which is provided in the middle of the optical fiber (20) and attenuates the light emitted from the radiation emitting element (10) at a predetermined ratio so as to fall within a predetermined intensity range.

3. The radiation monitor (100, 200, 300) according to any one of claims 1 to 2,
wherein the light emitting part (11) contains at least one rare earth element.

4. The radiation monitor (100, 200, 300) according to any one of claims 1 to 3,
wherein the radiation emitting element (10) is received in a virtual area in which an outer shape of the optical fiber (20) at a connection portion between the radiation emitting element (10) and the optical fiber (20) is extended in an axial direction of the optical fiber (20).

5. A radiation monitor (400) comprising:
a first radiation emitting element (10a) which includes a first light emitting part (11a) configured to emit light, and of an intensity corresponding to a dose rate of incident radiation;
a first optical fiber (20a) which is connected to the first radiation emitting element (10a) and transmits the light emitted from the first light emitting part (11a);
a first electric pulse converter (30a) which is connected to the first optical fiber (20a) and transmits one electric pulse for one photon of the transmitted light;
a first electric pulse detector (40a) which is connected to the first electric pulse converter (30a) and counts the electric pulse transmitted from the first electric pulse converter (30a);
a second radiation emitting element (10b) which includes a second light emitting part (10b) not containing a rare earth element;
a second optical fiber (20b) which is connected to the second radiation emitting element (10b) and transmits light emitted from the second light emitting part (11b);
a second electric pulse converter (30b) which is connected to the second optical fiber (20b) and transmits one electric pulse for one photon of the transmitted light;
a second electric pulse detector (40b) which is connected to the second electric pulse converter and counts the electric pulse transmitted from the second electric pulse converter (30b);
a differential analyzer (51) which is connected to the first and second electric pulse detectors (40a, 40b), calculates a difference in electric pulse count rate from the electric pulses counted by the first and second electric pulse detectors (40a, 40b), and converts the difference into a radiation dose rate; and
a first wavelength filter (25a) which is provided in the middle of the first optical fiber (20a) and allows a transmission of only light within a predetermined wavelength range; and
a second wavelength filter (25b) which is provided in the middle of the second optical fiber (20b) and allows a transmission of only light within the predetermined wavelength range,
wherein the first radiation emitting element (10a) and the second radiation emitting element (10b) are provided to be adjacent to each other,
wherein the first radiation emitting element (10a) further includes a first housing (12a) which receives the first light emitting part (11a), and a first intermediate member (13a) that is provided between the first housing (12a) and the first light emitting part (11a) and has a thermal emissivity smaller than a thermal emissivity of an inner surface of the first housing (12a), and
wherein the second radiation emitting element (10b) further includes a second housing (12b) which receives the second light emitting part (11b), and a second intermediate member (13b) that is provided between the second housing (12b) and the second light emitting part (11b) and has a thermal emissivity smaller than a thermal emissivity of an inner surface of the second housing (12b), and
wherein the first light emitting part (11a) is formed of transparent yttrium aluminum garnet as a base material and rare earth elements contained in the light transmitting material.

6. The radiation monitor (400) according to claim 5, further comprising:
a first light attenuation filter (23a) which is provided in the middle of the first optical fiber (20a) and attenuates the light emitted from the first radiation emitting element (10a) at a predetermined ratio as to fall within a predetermined intensity range; and
a second light attenuation filter (23b) which is provided in the middle of the second optical fiber (20b) and attenuates the light emitted from the second radiation emitting element (10b) at the predetermined ratio so as to fall within the predetermined intensity range.

7. The radiation monitor (400) according to any one of claims 5 or 6,
wherein the first radiation emitting element (10a) is received in a virtual area in which an outer shape of the first optical fiber (20a) at a connection portion between the first radiation emitting element (10a) and the first optical fiber (20a) is extended in an axial direction of the first optical fiber, and
wherein the second radiation emitting element (10b) is received in a virtual area in which an outer shape of the second optical fiber (20b) at a connection portion between the second radiation emitting element (10b) and the second optical fiber (20b) is extended in an axial direction of the second optical fiber (20b).

8. A radiation monitoring method comprising:
emitting light of an intensity corresponding to a dose rate of incident radiation from a light emitting part of a radiation emitting element;
transmitting the light emitted from the light emitting part by an optical fiber;
transmitting one electric pulse for one photon of the transmitted light by an electric pulse converter;
counting the electric pulse transmitted from the electric pulse converter by an electric pulse detector; and
converting the electric pulse count rate counted by the electric pulse detector into a radiation dose rate by an analyzer,
wherein a wavelength filter (25) is provided in the middle of the optical fiber (20) and allows a transmission of only light within a predetermined wavelength range;
wherein the radiation emitting element (10) includes a light emitting part (11), a housing (12) which receives the light emitting part (11), and an intermediate member (13) that is provided between the housing (12) and the light emitting part (11) and has a thermal emissivity smaller than a thermal emissivity of an inner surface of the housing (12),
wherein the light emitting part (11) is formed of transparent yttrium aluminum garnet as a base material and rare earth elements contained in the light transmitting material.

## Patentansprüche

1. Strahlungsmonitor (100), der Folgendes umfasst:
ein strahlungsemittierendes Element (10), das ein lichtemittierendes Teil (11), das zum Emittieren von Licht ausgelegt ist, umfasst und eine Intensität aufweist, die einer Dosisleistung von einfallender Strahlung entspricht;
eine Glasfaser (20), die mit dem strahlungsemittierenden Element (10) verbunden ist und das aus dem lichtemittierenden Teil (11) emittierte Licht durchlässt;
einen elektrischen Impulswandler (30), der mit der Glasfaser (20) verbunden ist und einen elektrischen Impuls für ein Photon des übertragenen Lichts überträgt;
einen elektrischen Impulsdetektor (40), der mit dem elektrischen Impulswandler verbunden ist und die elektrischen Impulse, die vom elektrischen Impulswandler übertragen werden, zählt;
eine Analyseeinheit (50), die mit dem elektrischen Impulsdetektor verbunden ist und die Zählrate der elektrischen Impulse, die durch den elektrischen Impulsdetektor erhalten wurde, in eine Strahlungsdosisleistung umwandelt; und
ein Wellenlängenfilter (25), das in der Mitte der Glasfaser (20) bereitgestellt ist und ausschließlich das Übertragen von Licht innerhalb eines vorbestimmten Wellenlängenbereichs ermöglicht;
wobei das strahlungsemittierende Element (10) ein lichtemittierendes Teil (11), ein Gehäuse (12), das das lichtemittierende Teil (11) aufnimmt, und ein Zwischenelement (13), das zwischen dem Gehäuse (12) und dem lichtemittierenden Teil (11) bereitgestellt ist, umfasst und ein thermisches Emissionsvermögen, das geringer ist als das thermische Emissionsvermögen einer Innenfläche des Gehäuses (12), aufweist,
wobei das lichtemittierende Teil (11) aus transparentem Yttrium-Aluminium-Granat als Basismaterial und im lichtübertragenden Material enthaltenen Seltenerdelementen gebildet ist.

2. Strahlungsmonitor (300) nach Anspruch 1, der ferner Folgendes umfasst:
ein lichtdämpfendes Filter (23), das in der Mitte der Glasfaser (20) bereitgestellt ist und das aus dem strahlungsemittierenden Element (10) emittierte Licht in einem vorbestimmten Verhältnis dämpft, damit es in einen vorbestimmten Intensitätsbereich fällt.

3. Strahlungsmonitor (100, 200, 300) nach einem der Ansprüche 1 bis 2, wobei das lichtemittierende Teil (11) zumindest ein Seltenerdelement umfasst.

4. Strahlungsmonitor (100, 200, 300) nach einem der Ansprüche 1 bis 3,
wobei das strahlungsemittierende Element (10) in einem virtuellen Bereich aufgenommen ist, in dem eine Außenform der Glasfaser (20) sich in einem Verbindungsabschnitt zwischen dem strahlungsemittierenden Element (10) und der Glasfaser (20) in einer Achsrichtung der Glasfaser (20) erstreckt.

5. Strahlungsmonitor (400), der Folgendes umfasst:
ein erstes strahlungsemittierendes Element (10a), das ein erstes lichtemittierendes Teil (11a), das zum Emittieren von Licht ausgelegt ist, umfasst und eine Intensität aufweist, die der Dosisleistung von einfallender Strahlung entspricht;
eine erste Glasfaser (20a), die mit dem ersten strahlungsemittierenden Element (10a) verbunden ist und das aus dem ersten lichtemittierenden Teil (11a) emittierte Licht überträgt;
einen ersten elektrischen Impulswandler (30a), der mit der ersten Glasfaser (20a) verbunden ist und einen elektrischen Impuls für ein Photon des übertragenen Lichts überträgt;
einen ersten elektrischen Impulsdetektor (40a), der mit dem ersten elektrischen Impulswandler (30a) verbunden ist und die elektrischen Impulse, die vom ersten elektrischen Impulswandler (30a) übertragen werden, zählt;
ein zweites strahlungsemittierendes Element (10b), das ein zweites lichtemittierendes Teil (10b) umfasst, das kein Seltenerdelement enthält;
eine zweite Glasfaser (20b), die mit dem zweiten strahlungsemittierenden Element (10b) verbunden ist und das aus dem zweiten lichtemittierenden Teil (11b) emittierte Licht überträgt;
einen zweiten elektrischen Impulswandler (30b), der mit der zweiten Glasfaser (20b) verbunden ist und einen elektrischen Impuls für ein Photon des übertragenen Lichts überträgt;
einen zweiten elektrischen Impulsdetektor (40b), der mit dem zweiten elektrischen Impulswandler verbunden ist und die elektrischen Impulse, die vom zweiten elektrischen Impulswandler (30b) übertragen werden, zählt;
eine Differenzanalyseeinheit (51), die mit dem ersten und dem zweiten elektrischen Impulsdetektor (40a, 40b) verbunden ist, eine Differenz der Zählrate der elektrischen Impulsrate aus den elektrischen Impulsen, die durch den ersten und den zweiten elektrischen Impulsdetektor (40a, 40b) erhalten wurden, berechnet und die Differenz in eine Strahlungsdosisleistung umwandelt; und
ein erstes Wellenlängenfilter (25a), das in der Mitte der ersten Glasfaser (20a) bereitgestellt ist und ausschließlich das Übertragen von Licht innerhalb eines vorbestimmten Wellenlängenbereichs ermöglicht;
ein zweites Wellenlängenfilter (25b), das in der Mitte der zweiten Glasfaser (20b) bereitgestellt ist und ausschließlich das Übertragen von Licht innerhalb des vorbestimmten Wellenlängenbereichs ermöglicht;
wobei das erste strahlungsemittierende Element (10a) und das zweite strahlungsemittierende Element (10b) bereitgestellt sind, um zueinander benachbart angeordnet zu sein,
wobei das erste strahlungsemittierende Element (10a) ferner ein erstes Gehäuse (12a), das das erste lichtemittierende Teil (11a) aufnimmt, und ein erstes Zwischenelement (13a), das zwischen dem ersten Gehäuse (12a) und dem ersten lichtemittierenden Teil (11a) bereitgestellt ist, umfasst und ein thermisches Emissionsvermögen, das geringer ist als das thermische Emissionsvermögen einer Innenfläche des ersten Gehäuses (12a), aufweist, und
wobei das zweite strahlungsemittierende Element (10b) ferner ein zweites Gehäuse (12b), das das zweite lichtemittierende Teil (11b) aufnimmt, und ein zweites Zwischenelement (13b), das zwischen dem zweiten Gehäuse (12b) und dem zweiten lichtemittierenden Teil (11b) bereitgestellt ist, umfasst und ein thermisches Emissionsvermögen, das geringer ist als das thermische Emissionsvermögen einer Innenfläche des zweiten Gehäuses (12b), aufweist
wobei das erste lichtemittierende Teil (11a) aus transparentem Yttrium-Aluminium-Granat als Basismaterial und im lichtübertragenden Material enthaltenen Seltenerdelementen gebildet ist.

6. Strahlungsmonitor (400) nach Anspruch 5, ferner Folgendes umfassend:
ein erstes lichtdämpfendes Filter (23a), das in der Mitte der ersten Glasfaser (20a) bereitgestellt ist und das aus dem ersten strahlungsemittierenden Element (10a) emittierte Licht in einem vorbestimmten Verhältnis dämpft, damit es in einen vorbestimmten Intensitätsbereich fällt; und
ein zweites lichtdämpfendes Filter (23b), das in der Mitte der zweiten Glasfaser (20b) bereitgestellt ist und das aus dem zweiten strahlungsemittierenden Element (10b) emittierte Licht in einem vorbestimmten Verhältnis dämpft, damit es in den vorbestimmten Intensitätsbereich fällt.

7. Strahlungsmonitor (400) nach einem der Ansprüche 5 oder 6,
wobei das erste strahlungsemittierende Element (10a) in einem virtuellen Bereich empfangen wird, in dem eine Außenform der ersten Glasfaser (20a) in einem Verbindungsabschnitt zwischen dem ersten strahlungsemittierenden Element (10a) und der ersten Glasfaser (20a) in einer Achsrichtung der ersten Glasfaser erweitert ist, und
wobei das zweite strahlungsemittierende Element (10b) in einem virtuellen Bereich empfangen wird, in dem eine Außenform der zweiten Glasfaser (20b) in einem Verbindungsabschnitt zwischen dem zweiten strahlungsemittierenden Element (10b) und der zweiten Glasfaser (20b) sich in einer Achsrichtung der zweiten Glasfaser (20b) erstreckt.

8. Strahlungsüberwachungsverfahren, das Folgendes umfasst:
Emittieren von Licht mit einer Intensität, die einer Dosisleistung von einfallender Strahlung aus einem lichtemittierenden Teil eines strahlungsemittierenden Elements entspricht;
Übertragen des aus dem lichtemittierenden Teil emittierten Lichts durch eine Glasfaser;
Übertragen eines elektrischen Impulses für ein Photon des übertragenen Lichts durch einen elektrischen Impulswandler;
Zählen der von dem elektrischen Impulswandler übertragenen elektrischen Impulse durch einen elektrischen Impulsdetektor; und
Umwandeln der Zählrate der vom elektrischen Impulsdetektor gezählten elektrischen Impulse in eine Strahlungsdosisleistung durch eine Analyseeinheit,
wobei ein Wellenlängenfilter (25) in der Mitte der Glasfaser (20) bereitgestellt ist und ausschließlich das Übertragen von Licht innerhalb eines vorbestimmten Wellenlängenbereichs ermöglicht;
wobei das strahlungsemittierende Element (10) ein lichtemittierendes Teil (11), ein Gehäuse (12), das das lichtemittierende Teil (11) aufnimmt, und ein Zwischenelement (13), das zwischen dem Gehäuse (12) und dem lichtemittierenden Teil (11) bereitgestellt ist, umfasst und ein thermisches Emissionsvermögen, das geringer ist als das thermische Emissionsvermögen einer Innenfläche des Gehäuses (12), aufweist,
wobei das lichtemittierende Teil (11) aus transparentem Yttrium-Aluminium-Granat als Basismaterial und im lichtübertragenden Material enthaltenen Seltenerdelementen gebildet ist.

## Revendications

1. Moniteur de rayonnement (100) comprenant :
un élément émetteur de rayonnement (10) qui comprend une partie émettrice de lumière (11) conçue pour émettre de la lumière, et d'une intensité correspondant à un taux de dosage d'un rayonnement incident ;
une fibre optique (20) qui est connectée à l'élément émetteur de rayonnement (10) et qui transmet la lumière émise par la partie émettrice de lumière (11) ;
un convertisseur d'impulsions électriques (30) qui est connecté à la fibre optique (20) et qui transmet une impulsion électrique pour un photon de lumière transmis ;
un détecteur d'impulsions électriques (40) qui est connecté au convertisseur d'impulsions électriques et qui compte les impulsions électriques transmises par le convertisseur d'impulsions électriques ;
un analyseur (50) qui est connecté au détecteur d'impulsions électriques et qui convertit le taux de comptage d'impulsions électriques obtenu par le détecteur d'impulsions électriques en un taux de dosage de rayonnement ; et
un filtre de longueurs d'onde (25) qui est disposé au centre de la fibre optique (20) et qui permet uniquement la transmission d'une lumière dans une plage de longueurs d'ondes déterminée ;
dans lequel l'élément émetteur de rayonnement (10) comprend une partie émettrice de lumière (11), un boîtier (12), qui reçoit la partie émettrice de lumière (11), et un élément intermédiaire (13) qui est disposé entre le boîtier (12) et la partie émettrice de lumière (11) et qui présente une émissivité thermique inférieure à une émissivité thermique d'une surface interne du boîtier (12),
dans lequel la partie émettrice de lumière (11) est constituée d'un grenat d'yttrium-aluminium transparent en tant que matériau de base et des éléments de types terres rares contenus dans le matériau transmettant la lumière.

2. Moniteur de rayonnement (300) selon la revendication 1, comprenant en outre :
un filtre d'atténuation de la lumière (23) qui est disposé au centre de la fibre optique (20) et qui atténue la lumière émise par l'élément émetteur de rayonnement (10) avec un ratio prédéterminé de façon à tomber dans une plage d'intensité prédéterminée.

3. Moniteur de rayonnement (100, 200, 300) selon l'une des revendications 1 à 2,
dans lequel la partie émettrice de lumière (11) contient au moins un élément de type terre rare.

4. Moniteur de rayonnement (100, 200, 300) selon l'une des revendications 1 à 3,
dans lequel l'élément émetteur de rayonnement (10) est logé dans une zone virtuelle dans laquelle une forme extérieure de la fibre optique (20), au niveau d'une portion de connexion entre l'élément émetteur de rayonnement (10) et la fibre optique (20), est étendue dans une direction axiale de la fibre optique (20).

5. Moniteur de rayonnement (400) comprenant :
un premier élément émetteur de rayonnement (10a) qui comprend une première partie émettrice de lumière (11a) conçue pour émettre de la lumière, et d'une intensité correspondant à un taux de dosage d'un rayonnement incident ;
une première fibre optique (20a) qui est connectée au premier élément émetteur de rayonnement (10a) et qui transmet la lumière émise par la première partie émettrice de lumière (11a) ;
un premier convertisseur d'impulsions électriques (30a) qui est connecté à la première fibre optique (20a) et qui transmet une impulsion électrique pour un photon de la lumière transmise ;
un premier détecteur d'impulsions électriques (40a) qui est connecté au premier convertisseur d'impulsions électriques (30a) et qui compte les impulsions électriques transmises par le premier convertisseur d'impulsions électriques (30a) ;
un deuxième élément émetteur de rayonnement (10b) qui comprend une deuxième partie émettrice de lumière (10b) ne contenant pas un élément de type terre rare ;
une deuxième fibre optique (20b) qui est connectée au deuxième élément émetteur de rayonnement (10b) et qui transmet la lumière émise par la deuxième partie émettrice de lumière (11b) ;
un deuxième convertisseur d'impulsions électriques (30b) qui est connecté à la deuxième fibre optique (20b) et qui transmet une impulsion électrique pour un photon de la lumière transmise ;
un deuxième détecteur d'impulsions électriques (40b) qui est connecté au deuxième convertisseur d'impulsions électriques et qui compte les impulsions électriques transmises par le deuxième convertisseur d'impulsions électriques (30b) ;
un analyseur différentiel (51) qui est connecté aux premier et deuxième détecteurs d'impulsions électriques (40a, 40b), qui calcule une différence de taux de comptage d'impulsions électriques des impulsions électriques comptées par les premier et deuxième détecteurs d'impulsions électriques (40a, 40b) et qui convertit la différence en un taux de dosage de rayonnement ; et
un premier filtre de longueurs d'ondes (25a) qui est disposé au centre de la première fibre optique (20a) et qui permet uniquement la transmission d'une lumière dans une plage de longueurs d'ondes prédéterminée ; et
un deuxième filtre de longueurs d'ondes (25b) qui est disposé au centre de la deuxième fibre optique (20b) et qui permet uniquement la transmission d'une lumière dans la plage de longueurs d'ondes prédéterminée,
dans lequel le premier élément émetteur de rayonnement (10a) et le deuxième élément émetteur de rayonnement (10b) sont disposés de façon à être adjacents entre eux,
dans lequel le premier élément émetteur de rayonnement (10a) comprend en outre un premier boîtier (12a), qui reçoit la première partie émettrice de lumière (11a), et un premier élément intermédiaire (13a) qui est disposé entre le premier boîtier (12a) et la première partie émettrice de lumière (11a) et qui présente une émissivité thermique inférieure à une émissivité thermique d'une surface interne du premier boîtier (12a) et
dans lequel le deuxième élément émetteur de rayonnement (10b) comprend en outre un deuxième boîtier (12b) qui reçoit la deuxième partie émettrice de lumière (11b) et un deuxième élément intermédiaire (13b) qui est disposé entre le deuxième boîtier (12b) et la deuxième partie émettrice de lumière (11b) et qui présente une émissivité thermique inférieure à une émissivité thermique d'une surface interne du deuxième boîtier (12b) et
dans lequel la première partie émettrice de lumière (11a) est constituée d'un grenat d'yttrium-aluminium en tant que matériau de base et d'éléments de types terres rares contenus dans le matériau transmettant la lumière.

6. Moniteur de rayonnement (400) selon la revendication 5, comprenant en outre :
un premier filtre d'atténuation de la lumière (23a) qui est disposé au centre de la première fibre optique (20a) et qui atténue la lumière émise par le premier élément émetteur de rayonnement (10a) avec un ratio prédéterminé de façon à tomber dans une plage d'intensité prédéterminée ; et
un deuxième filtre d'atténuation de la lumière (23b) qui est disposé au centre de la deuxième fibre optique (20b) et qui atténue la lumière émise par le deuxième élément émetteur de rayonnement (10b) avec le ratio prédéterminé de façon à tomber dans la plage d'intensité prédéterminée.

7. Moniteur de rayonnement (400) selon l'une des revendications 5 ou 6,
dans lequel le premier élément émetteur de rayonnement (10a) est logé dans une zone virtuelle dans laquelle une forme extérieure de la première fibre optique (20a), au niveau d'une portion de connexion entre le premier élément émetteur de rayonnement (10a) et la première fibre optique (20a), est étendue dans une direction axiale de la première fibre optique (20a) et
dans lequel le deuxième élément émetteur de rayonnement (10b) est logé dans une zone virtuelle dans laquelle une forme extérieure de la deuxième fibre optique (20b), au niveau d'une portion de connexion entre le deuxième élément émetteur de rayonnement (10b) et la deuxième fibre optique (20b), est étendue dans une direction axiale de la deuxième fibre optique (20b) .

8. Procédé de surveillance de rayonnement comprenant :
l'émission d'une lumière d'une intensité correspondant à un taux de dosage d'un rayonnement incident à partir d'une partie émettrice de lumière d'un élément émetteur de lumière ;
la transmission de la lumière émise à partir de la partie émettrice de lumière par une fibre optique ;
la transmission d'une impulsion électrique pour un photon de la lumière transmise par un convertisseur d'impulsions électriques ;
le comptage des impulsions électriques transmises à partir du convertisseur d'impulsions électriques par un détecteur d'impulsions électriques ; et
la conversion du taux de comptage d'impulsions électriques comptées par le détecteur d'impulsions électriques en un taux de dosage de rayonnement par un analyseur,
dans lequel un filtre de longueurs d'ondes (25) est disposé au centre de la fibre optique (20) et permet uniquement la transmission d'une lumière dans une plage de longueurs d'ondes prédéterminée ;
dans lequel l'élément émetteur de rayonnement (10) comprend une partie émettrice de lumière (11), un boîtier (12), qui reçoit la partie émettrice de lumière (11), et un élément intermédiaire (13) qui est disposé entre le boîtier (12) et la partie émettrice de lumière (11) et qui présente une émissivité thermique inférieure à une émissivité thermique d'une surface interne du boîtier (12),
dans lequel la partie émettrice de lumière (11) est constitué d'un grenat d'yttrium-aluminium en tant que matériau de base et d'éléments de type terres rares contenus dans le matériau transmettant la lumière.
